# EUROPÄISCHE PATENTSCHRIFT

(11) **EP 2 570 681 B1**
(45) Veröffentlichungstag und Bekanntmachung des Hinweises auf die Patenterteilung: **10.06.2015**
(21) Anmeldenummer: 12184140.7
(22) Anmeldetag: 12.09.2012
(51) Int. Cl.: F16B 5/02

(54) **Haltenocken**
Retaining cam
Taquets de retenue

(30) Priorität: 15.09.2011 DE 102011113356
(43) Veröffentlichungstag der Anmeldung: 20.03.2013
(73) Patentinhaber: Fairchild Fasteners Europe - Camloc GmbH, 65761 Kelkheim (Taunus) (DE)
(72) Erfinder: Jüling, Dieter, 65779 Kelkheim (DE); Janofske, Dipl.-Ing. Klemens, 65779 Kelkheim (DE)
(74) Vertreter: Keil & Schaafhausen Patent- und Rechtsanwälte

(56) Entgegenhaltungen:
- EP-A1- 0 042 170
- EP-B1- 2 215 370

## Beschreibung

Die Erfindung betrifft einen Haltenocken, welcher für einen Schnellverschluss zum Verbinden von beispielsweise plattenförmigen Bauteilen geeignet ist. Ein solcher Haltenocken weist einen Käfig auf, der starr mit einem der Bauteile verbindbar ist und eine Grundplatte aufweist, die eine in Einbaulage mit einem der Bauteile parallele Ebene definiert. Weiter ist der Haltenocken mit einem schwenkbar an dem Käfig gelagerten Gehäuse versehen, in dem eine Haltenockenschraube drehfest angeordnet ist, auf die ein mit einem anderen Bauteil verbindbare Verschlussbolzen mit einem Innengewinde aufschraubbar ist.

In der Luft- und Raumfahrt werden zunehmend Bauteile und Komponenten, insbesondere aus Komposit-Materialien, eingesetzt, welche im Vergleich zu Aluminiumbauteilen größere Toleranzen sowohl hinsichtlich der Dicke als auch hinsichtlich der Planparallelität aufweisen. Schnellverschlüsse, die vom grundsätzlichen Aufbau her aus der DE 103 19 930 B4 bekannt sind, sind diesbezüglich besonders empfindlich, da durch eine nicht ideal fluchtende Ausrichtung der Haltenockenschraube mit dem Verschlussbolzen unerwünschte Biegespannungen über die Haltenockenschraube in das Gehäuse und den Käfig eingeleitet werden können.

Ein Haltenocken der eingangs genannten Art sowie ein entsprechender Schnellverschluss sind aus der EP 2 215 370 B1 bekannt. Bei diesem Schnellverschluss ist zur schwenkbaren Lagerung des Haltenockens eine konvexe Kugelscheibe vorgesehen, über die sich das Gehäuse des Haltenockens schwenkbar an der Grundplatte abstützen kann. Das Gehäuse des Haltenockens weist hierzu eine entsprechend konkave Gegenkontur an einer seiner Stirnseiten auf. Der Schwenkpunkt, um den sich das Gehäuse bewegen kann liegt somit auf der dem Gehäuse abgewandten Seite des Käfigs, bspw. im Bereich der miteinander zu verbindenden Bauteile. Sowohl die Kugelscheibe als auch das Gehäuse weisen jeweils zwei einander diametral gegenüberliegende Tragvorsprünge auf, die in einander diametral gegenüberliegende Tragöffnungen des Käfigs eingreifen. Damit sind die Tragvorsprünge sowohl der Kugelscheibe als auch des Gehäuses jeweils in der selben Tragöffnung aufgenommen, so dass sich abhängig von der Schwenkstellung des Gehäuses relativ zu dem Käfig keine Möglichkeit zu einer Bewegung des Gehäuses relativ zu dem Käfig in einer zu der Ebene der Grundplatte parallelen Richtung ergibt.

Aufgabe der vorliegenden Erfindung ist es demgegenüber, einen verbesserten Haltenocken bereitzustellen, der einfacher herstellbar ist und zusätzliche Freiheitsgrade hinsichtlich der Ausrichtung des Gehäuses relativ zu dem miteinander zu verbindenden plattenförmigen Bauteilen aufweist.

Diese Aufgabe wird erfindungsgemäß mit einem Haltenocken der eingangs genannten Art dadurch gelöst, dass das Gehäuse relativ zu dem Käfig um einen dem Käfig abgewandten Schwenkpunkt schwenkbar gelagert ist und dass unabhängig von dieser Schwenkbarkeit das Gehäuse relativ zu dem Käfig in einer zu der Ebene der Grundplatte parallelen Richtung verschiebbar ist. Mit anderen Worten ist die Verschiebbarkeit bzw. die schwimmende Lagerung des Gehäuses nicht allein durch das für die Schwenkbarkeit erforderliche Spiel innerhalb des Käfigs erreicht, sondern es kann selbst bei maximaler Auslenkung des Gehäuses relativ zu dem Käfig um den Schwenkpunkt noch zusätzlich ein Versatz in einer zu der Ebene der Grundplatte parallelen Richtung realisiert werden. Damit ist auch bei größeren Toleranzen der miteinander zu verbindenden Bauteile eine sichere Verbindung mittels des Schnellverschlusses möglich. Die Schwenkbarkeit des Gehäuses relativ zu dem Käfig um einen auf der dem Käfig abgewandten Seite des Gehäuses liegenden Schwenkpunkt sichert zudem eine größere Bewegbarkeit des Gehäuses relativ zu dem Käfig.

Unabhängig von weiteren Merkmalen liegt ein Grundgedanke der Erfindung somit darin, das Gehäuse um einen in der Haltenockenschraube liegenden Schwenkpunkt schwenkbar zu lagern. Dies vereinfacht das Einführen der Haltenockenschraube in den hohlen Verschlussbolzen erheblich.

Wenn das Gehäuse auf einer dem Käfig zugewandten Seite mit einer zylindrischen Öffnung versehen ist, deren Innendurchmesser im Wesentlichen gleich dem Außendurchmesser eines Abschnitts des Verschlussbolzens ist, kann sich der Verschlussbolzen unmittelbar an dem Gehäuse abstützen. Dies entlastet die Haltenockenschraube und deren Verbindung innerhalb des Gehäuses, insbesondere bei der Übertragung von Querkräften zwischen den miteinander über den Haltenocken verbundenen Bauteilen.

Nach einer bevorzugten Ausführungsform der Erfindung ist hierzu das Gehäuse auf einer dem Käfig zugewandten Stirnseite mit einer konvexen Kugelkalotte mit einer zentralen Öffnung versehen, wobei die konvexe Kugelkalotte zur schwenkbaren Lagerung des Gehäuses mit einer Ausgleichsscheibe zusammenwirkt, die eine entsprechende konkave Kalottenfläche mit einer Öffnung aufweist. Im Gegensatz zu dem aus der EP 2 215 370 B1 bekannten Haltenocken muss keine vergleichsweise dicke Kugelscheibe mit einer konvexen Geometrie realisiert werden, sondern die erfindungsgemäß vorgesehene Ausgleichsscheibe mit einer konkaven Kalottenfläche kann beispielsweise als Blechumformteil hergestellt werden. Zudem begrenzt bei dieser Ausgestaltung die Ausgleichsscheibe nicht die Verschwenkbewegung der Haltenockenschraube. Zudem ist es fertigungstechnisch mit einfachen Mitteln möglich, an der Stirnseite des Gehäuses eine konvexe Kugelkalotte auszubilden.

Es wird besonders bevorzugt, wenn die Ausgleichsscheibe mittels eines zwischen dem Gehäuse und dem Käfig angeordneten Halteclips, insbesondere verliersicher, an dem Gehäuse befestigt ist. Diese separate Befestigung der Ausgleichsscheibe an dem Gehäuse des Haltenockens sorgt dafür, dass die miteinander zusammenwirkenden Kalottenflächen des Gehäuses und der Ausgleichsscheibe nicht außer Eingriff geraten oder verkanten können. Zudem ist es möglich, das Gehäuse zusammen mit der Ausgleichsscheibe auszuwechseln, ohne dass die Gefahr besteht, dass einzelne Bauteile verloren gehen. Die Befestigung der Ausgleichsscheibe an dem Gehäuse mittels des Halteclips erfolgt vorzugsweise derart, dass keine nennenswerte Bewegung der Ausgleichsscheibe oder des Halteclips relativ zu dem Gehäuse in einer zu der Ebene zu der Grundplatte parallelen Richtung möglich ist. Hierdurch wird eine sichere Führung der Ausgleichsscheibe und des Gehäuses in den einander zugeordneten Kalottenflächen erreicht.

In Weiterbildung dieses Erfindungsgedankens ist es vorgesehen, dass das Gehäuse erste Befestigungsvorsprünge aufweist, die zur Befestigung des Gehäuses an dem Halteclip in Öffnungen des Halteclips eingreifen. Die Größe der Befestigungsvorsprünge und der Öffnungen des Halteclips sind dabei so aufeinander abgestimmt, dass eine Schwenkbewegung des Gehäuses relativ zu dem Halteclip ermöglicht wird.

Die Befestigung des Gehäuses an dem Käfig kann entweder unmittelbar erfolgen oder mittelbar, d.h. beispielsweise über den Halteclip. In dem erstgenannten Fall weist das Gehäuse vorzugsweise zweite Befestigungsvorsprünge auf, die zur Lagerung des Gehäuses in dem Käfig in Öffnungen des Käfigs eingreifen. Eine diametral gegenüberliegende Anordnung zweier zweiten Befestigungsvorsprünge wird hierbei bevorzugt. In dem anderen Fall kann der Halteclip zweite Befestigungsvorsprünge aufweisen, die wiederum zur mittelbaren Lagerung des Gehäuses in dem Käfig in Öffnungen des Käfigs eingreifen.

Die Befestigung des Gehäuses an dem Käfig erfolgt vorzugsweise derart, dass das Gehäuse bei Bedarf von dem Käfig gelöst werden kann. Hierzu kann der Käfig sich von der Grundplatte weg erstreckende Abschnitte aufweist, von denen wenigstens zwei eine Öffnung und eine dieser zugeordnete federnde Befestigungszunge aufweisen. Es ist somit möglich, dass die zweiten Befestigungsvorsprünge des Gehäuses bzw. des Halteclips in die entsprechenden Öffnungen des Käfigs einrasten.

Die von der Verschwenkbarkeit des Gehäuses unabhängige Bewegbarkeit des Gehäuses (schwimmende Lagerung) relativ zu dem Käfig in einer zu der Ebene der Grundplatte parallelen Richtung kann beispielsweise dadurch realisiert werden, dass der Halteclip relativ zu dem Käfig in einer zu der Ebene der Grundplatte parallelen Richtung verschiebbar ist. Hierdurch wird erreicht, dass ein verschwenken des Gehäuses nicht die Verschiebbarkeit beeinträchtigt. Grundsätzlich kann die schwimmende Lagerung aber auch zwischen dem Halteclip und dem Gehäuse realisiert werden.

Der Käfig ist vorzugsweise zur starren Befestigung an einem der miteinander zu verbindenden Bauteile ausgestaltet. Dies kann durch eine Klemmverbindung, eine Schraub- oder Nietverbindung oder beispielsweise durch eine Verklebung erfolgen. Wenn der Käfig an dem Bauteil festgeklebt wird, sind auch auf dem Gehäuse abgewandten Seite der Grundplatte des Käfigs vorzugsweise Vorsprünge, Sicken und/oder Stege vorgesehen. Dies gewährleistet, dass der richtige Abstand zum Bauteil eingehalten wird, um eine definierte Filmdicke des Klebers und eine gleichmäßigen Grip zu erreichen.

Um ein Lösen des Verschlussbolzens von der Haltenockenschraube auch bei Variationen, die beispielsweise im Flugbetrieb auftreten können, zu verhindern, ist der Haltenockenschraube vorzugsweise eine Verdrehsicherung mit einem Federelement zugeordnet. Das Federelement erzeugt dabei eine elastische Vorspannung, welche die Verdrehsicherung zwischen der Haltenockenschraube und dem Verschlussbolzen realisiert. Es wird besonders bevorzugt, wenn diese Verdrehsicherung wie in der DE 103 19 930 B4, auf welche zum Zwecke der Offenbarung Bezug genommen wird, beschrieben mit zusammenwirkenden profilierten Scheiben ausgestaltet ist.

Insbesondere für eine Verklebung des Käfigs ist es hilfreich, einen Montagestift vorzusehen, mit welchem der Haltenocken an einem Bauteil befestigt werden kann, während der Käfig an diesem Bauteil fixiert wird. Vorzugsweise ist ein solcher Montagestift statt des Verschlussbozens lösbar mit der Haltenockenschraube verbindbar. Die Befestigung des Montagestiftes und damit des Haltenockens kann beispielsweise über Klemmarme oder Spreitzarme erfolgen.

Die Erfindung wird nachfolgend anhand von Ausführungsbeispielen und unter Bezugnahme auf die Zeichnung näher erläutert.

Es zeigen schematisch:
- Fig. 1: in Schnittansicht einen Haltenocken nach einer ersten Ausführungsform der Erfindung,
- Fig. 2a: Ausschnittsweise den Haltenocken nach Fig. 1 in neutraler Stellung,
- Fig. 2b: Ausschnittsweise den Haltenocken nach Fig. 1 in verschwenkter Stellung,
- Fig. 3: einen der Darstellung der Fig. 1 ähnlichen Haltenocken in Perspektivansicht,
- Fig. 4: in Perspektivansicht einen Haltenocken nach einer zweiten Ausführungsform,
- Fig. 5: in Perspektivansicht einen Haltenocken nach einer dritten Ausführungsform,
- Fig. 6: in Schnittansicht ein Detail des Haltenockens nach Fig. 5,
- Fig. 7: in Perspektivansicht einen Haltenocken nach einer vierten Ausführungsform,
- Fig. 8: in Perspektivansicht einen Haltenocken nach einer fünften Ausführungsform,
- Fig. 9: eine Haltenocken mit einem Montagestift in teilweise geschnittener Ansicht, und
- Fig. 10: einen Haltenocken mit einem weiteren Montagestift in teilweise geschnittener Ansicht.

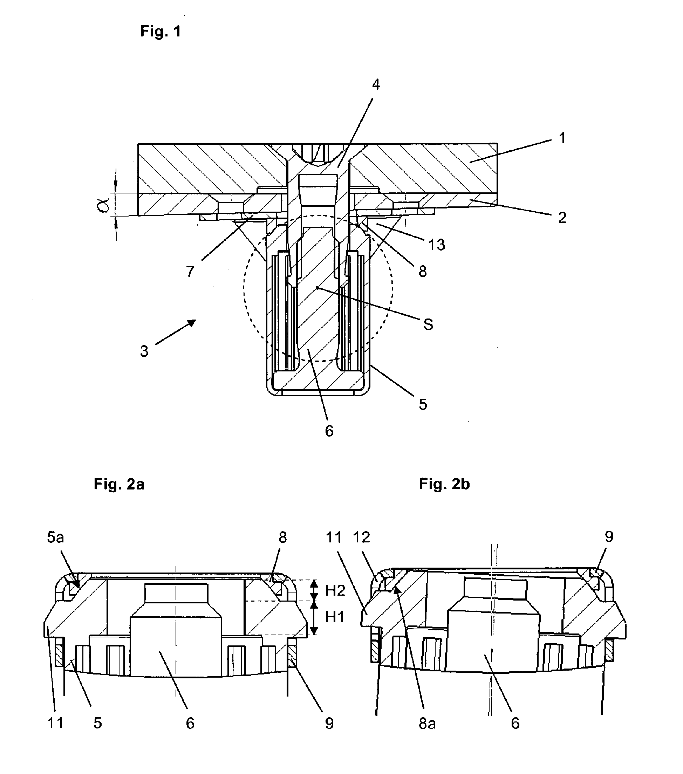

In Fig. 1 ist ein Schnellverschluss zur Verbindung zweier Bauteile 1 und 2 dargestellt. Die beiden Bauteile 1 und 2 sind beispielsweise Platten, welche im Luft- und Raumfahrbereich eingesetzt werden können. Wie durch den Winkel α in Fig. 1 angedeutet, ist das Bauteil 2 nicht vollständig planparallel, sondern weist eine sich verändernde Dicke auf. Die beiden Bauteile 1 und 2 sind beide mit Durchgangsbohrungen versehen und über einen grundsätzlich aus der DE 103 19 930 B4 bekannten Schnellverschluss miteinander verbunden. Hierzu ist auf der in Fig. 1 unteren Seite des Bauteils 2 ein sogenannter Haltenocken 3 befestigt, welcher mit einem Verschlussbolzen 4 zusammenwirkt, der durch die Öffnungen der beiden Bauteile 1 und 2 ähnlich einer Verschlussschraube hindurchgeführt werden kann.

Der Haltenocken 3 weist ein Gehäuse 5 auf, in dem eine Haltenockenschraube 6 drehfest aufgenommen ist. Die Haltenockenschraube 6 verschließt das Gehäuse 5 auf der in Fig. 1 unteren Seite und ist zumindest bereichsweise mit einem Außengewindeabschnitt versehen, welcher mit einem entsprechenden Innengewindeabschnitt des hohlen Verschlussbolzens 4 in Eingriff bringbar ist. Weiter ist in dem Gehäuse 5 eine nicht näher dargestellte Verdrehsicherung vorgesehen, welche mittels eines Federelements ein Verdrehen des Verschlussbolzens 4 in der in Fig. 1 gezeigten Position soweit erschwert, dass auch bei Vibrationen und Erschütterungen sich die Verschraubung zwischen der Haltenockenschraube 6 und dem Verschlussbolzen 4 nicht löst.

Das Gehäuse 5 ist an seinem in Fig. 1 oberen Ende mit einer zylindrischen Öffnung versehen, die eine Anlagefläche für den Verschlussbolzen 4 bildet. Hierzu ist der Innendurchmesser der zylindrischen Öffnung im Wesentlichen gleich dem Außendurchmesser eines zylindrischen Abschnitts des Verschlussbolzens 4. Somit kann sich der Verschlussbolzen 4 direkt an dem Gehäuse 5 abstützen, wenn Querkräfte in die Bauteile 1, 2 eingeleitet werden. Diese Abstützung entlastete die Haltenockenschraube 6 sowie deren Befestigung innerhalb des Gehäuses 5.

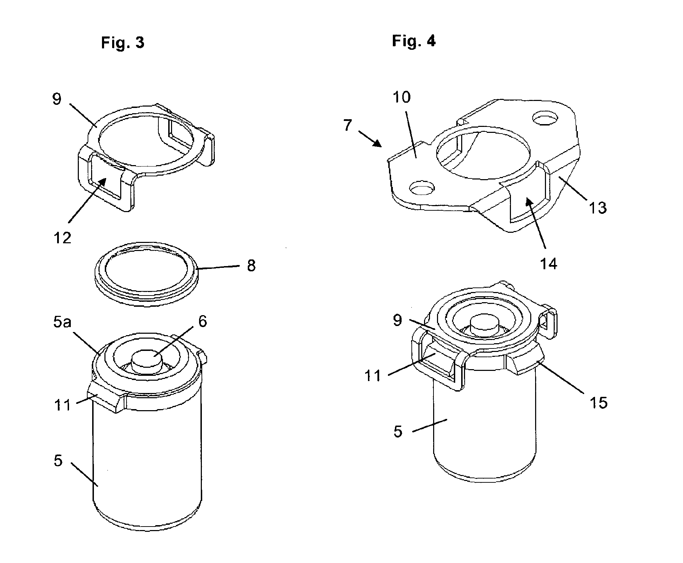

Weiter weist der Haltenocken 3 einen Käfig 7 auf, der in der dargestellten Ausführungsform mittels einer Nietverbindung mit dem zweiten Bauteil 2 fest verbunden werden kann. Wie auch in Fig. 3 näher dargestellt ist, ist zudem eine Ausgleichsscheibe 8 an dem Gehäuse 5 vorgesehen, welche über einen Halteclip 9 an diesem befestigt ist.

Das Gehäuse 5 des Haltenockens 3 ist auf seiner dem Käfig 7 zugewandten Stirnseite bereichsweise mit einer konvexen Kugelfläche (Kalotte) 5a ausgestaltet. Die Ausgleichsscheibe 8 ist mit einer entsprechenden konkaven Gegenkontur 8a versehen, so dass die Ausgleichsscheibe 8 relativ zu dem Gehäuse 5 entlang eines in Fig. 1 gestrichelt angedeuteten Kreises verschwenkbar ist. Die Ausgestaltung der für die Verschwenkbarkeit miteinander zusammenwirkenden Flächen 5a, 8a des Gehäuses 5 und der Ausgleichsscheibe 8 ist dabei so gewählt, dass der Mittelpunkt S der Kugelfläche auf der dem Käfig 7 angewandten Seite vorgesehen ist. Um eine möglichst große Verschwenkbarkeit zu erzielen, ist der Radius der Kugel so klein gewählt, dass der Mittelpunkt S in der Haltenockenschraube 6 liegt, vorzugsweise etwa in deren Mitte.

Die Verschwenkbarkeit des Gehäuses 5 relativ zu dem Käfig 7 ist in den Figuren 2a und 2b näher dargestellt, wobei Fig. 2a eine neutrale Position zeigt, in welcher die Haltenockenschraube 6 senkrecht zu einer Grundplatte 10 des Käfigs 7 ausgerichtet ist, während Fig. 2b eine hierzu verschwenkte Stellung zeigt. Unabhängig von der zuvor beschriebenen Ausgestaltung des Gehäuses und der Ausgleichsscheibe wird es bevorzugt, wenn das Gehäuse 5 aus der in Fig. 2a gezeigten neutralen Stellung in jede Richtung um mehr als 5° verschwenkbar ist, d.h. insgesamt um mehr als 10° verschwenkbar ist, insbesondere um wenigstens etwa 12°.

Die Verbindung der Ausgleichsscheibe 8 mit dem Gehäuse 5 mittels des Halteclips 9 ist in Fig. 3 näher dargestellt. In Fig. 3 sind der Halteclip 9 bzw. das Gehäuse 5 vereinfacht dargestellt, da Befestigungsvorsprünge zur Anbindung an den Käfig weggelassen sind. Das Gehäuse 5 weist in der Nähe seines mit der Kugelfläche 5a versehenen stirnseitigen Endes zwei einander diametral gegenüberliegende erste Befestigungsvorsprünge 11 auf. Der Halteclip 9 ist als ein Ring ausgestaltet, in welchem sich die Ausgleichsscheibe 8 abstützen kann. Zudem weist der Halteclip 9 zwei einander diametral gegenüberliegende Flügel auf, die gegenüber der Haupterstreckungsrichtung des Rings abgewinkelt sind und in Richtung zu dem Gehäuse 5 weisen. In diesen Flügeln ist jeweils eine Öffnung 12 vorgesehen, in welche die jeweiligen Befestigungsvorsprünge 11 eingreifen können, um die Ausgleichsscheibe 8 verliersicher an dem Gehäuse 5 zu befestigen. Die Größe der Öffnungen 12 ist dabei derart an die Größe der ersten Befestigugnsvorsprünge 11 angepasst, dass die in Fig. 2b gezeigte Verschwenkbewegung des Gehäuses 5 relativ zu dem Halteclip 9 ermöglicht wird. Mit andern Worten sind die Öffnungen 12 geringfügig größer als die Befestigungsvorsprünge 11.

Wie in Fig. 2a dargestellt, weist das Gehäuse 5 im Bereich der Befestigungsvorsprünge 11 eine zylindrische Öffnung auf, die die Haltenockenschraube 6 umgibt. Auch die konvexe Kugelkalotte 5a bildet eine zylindrische Öffnung, welche die zylindrische Öffnung im Bereich der Befestigungsvorsprünge 11 in Richtung zum Käfig 7 verlängert. Die Länge der zylindrischen Öffnung im Bereich der Befestigungsvorsprünge 11 ist in Fig. 2a mit H1 gekennzeichnet, die Länge des durch die zylindrische Öffnung in der konvexen Kugelkalotte 5a gebildeten, verlängernden Bereichs ist mit H2 gekennzeichnet. Diese verlängerte zylindrische Öffnung kann als Anlagefläche für den Verschlussbolzen 4 dienen und kann so Scherkräfte aufnehmen und von einem Bauteil direkt über den Käfig 7 und die zylindrische Öffnung in den Verschlussbolzen 4 und damit das andere Bauteil übertragen, ohne dass die Haltenockenschraube 6, insbesondere auf ihrer dem Käfig 7 abgewandten Seite, stark auf Biegung belastet wird.

Eine erste Ausführungsform eines Käfigs 7 ist in Fig. 4 dargestellt. Der Käfig weist dabei die sich parallel zu der in Fig. 1 unteren Seite des Bauteils 2 erstreckende Grundplatte 10 auf, die eine Ebene definiert. Über Öffnungen in der Grundplatte 10 kann diese mittels einer Schraub- oder Nietverbindung mit einem der beiden Bauteile 2 starr verbunden werden. Weiter weist der Käfig 7 in der in Fig. 4 dargestellten Ausführungsform von der Grundplatte 10 abragende Laschen 13 auf, in welchen jeweils eine Öffnung 14 vorgesehen ist. Abweichend von der Darstellung in Fig. 3 ist das Gehäuse 5 zusätzlich mit zweiten Befestigugnsvorsprünge 15 ausgestattet, welche sich wiederum diametral gegenüberliegen und zu den ersten Befestigungsvorsprüngen 11 um etwa 90° versetzt sind. Die zweiten Befestigugnsvorsprünge 15 können in die Öffnungen 14 des Käfigs 7 eingreifen, um das Gehäuse 5 an dem Käfig 7 zu befestigen. Dabei ist die Größe der Öffnungen 14 so bemessen, dass das Gehäuse 5 relativ zu dem Käfig 7 in einer durch die Grundplatte 10 definierten Ebene verschoben werden kann. Mit andern Worten sind die Öffnungen 14 größer als die zweiten Befestigugnsvorsprünge 15, so dass das Gehäuse 5 in Fig. 1 nach links und rechts bzw. in und aus der Zeichnungsebene bewegt werden kann. Damit ist das Gehäuse 5 unabhängig von seiner Verschwenkbarkeit relativ zu der Ausgleichsscheibe 8 zusätzlich auch relativ zu dem Käfig 7 verschiebbar. Hierbei kann das Gehäuse 5 gemeinsam mit der Ausgleichsscheibe 8 und dem Halteclip 9 relativ zu dem Käfig 7 verschoben werden, wobei die Schwenkbewegung des Gehäuses 5 relativ zu der Ausgleichsscheibe, dem Halteclip und dem Käfig erfolgt.

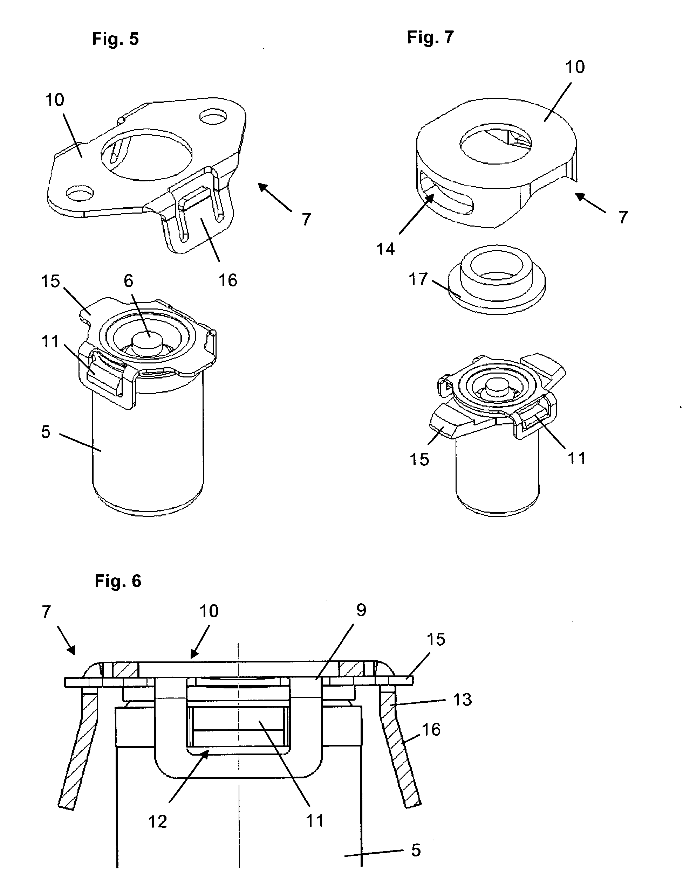

Eine alternative Ausgestaltung ist in den Figuren 5 und 6 dargestellt. Hierbei ist statt des Gehäuses 5 der Halteclip 9 mit den zweiten Befestigungsvorsprüngen 15 versehen, welche wiederum in entsprechende Öffnungen 14 des Käfigs 7 eingreifen können. In der Ausführungsform nach Fig. 5 ist eine Schnappverbindung zwischen dem Käfig 7 und dem Halteclip 9 vorgesehen, indem in den Öffnungen 14 federnde Zungen 16 vorgesehen sind, welche die zweiten Befestigungsvorsprünge 15 des Halteclips 9 hintergreifen können, wenn dieser mit dem Käfig 7 verbunden ist. Ähnlich wie in der Darstellung der Fig. 4 ist das Gehäuse 5 wiederum schwimmend in dem Käfig 7 gelagert, da es sich parallel zu der durch die Grundplatte 10 definierten Ebene bewegen kann.

In der Ausführungsform nach Fig. 7 ist der Käfig 7 mittels einer Befestigungshülse 17 in der Bohrung des zweiten Bauteils 2 festklemmbar. Auf eine Niet- oder Schraubverbindung kann in diesem Fall verzichtet werden. Die Verbindung zwischen dem Gehäuse 5 und dem Käfig 7 erfolgt wiederum durch an dem Gehäuse 5 selbst vorgesehen zweite Befestigungsvorsprünge 15.

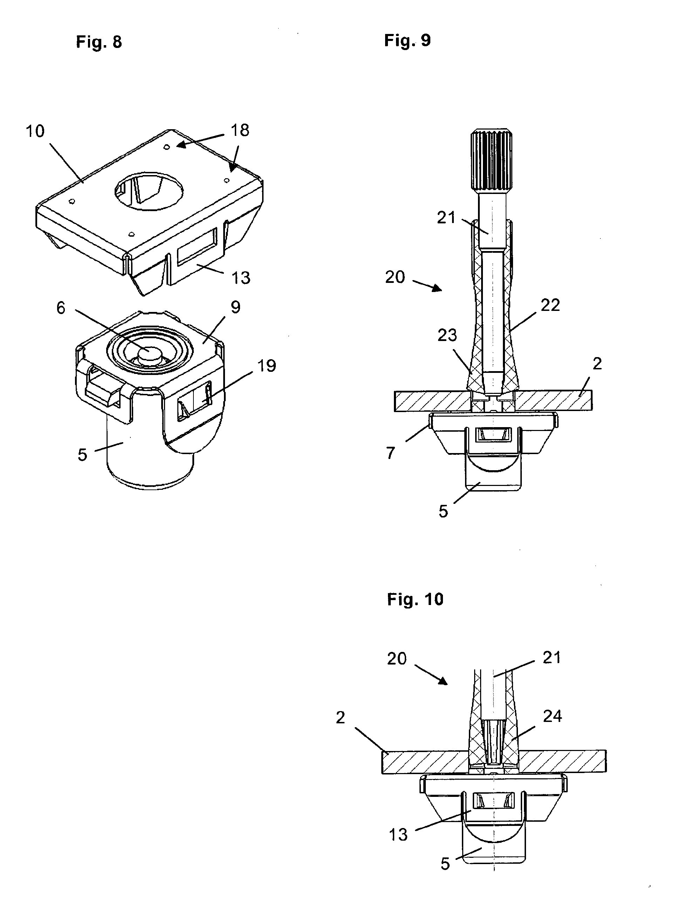

Bei der Ausführungsform nach Fig. 8 ist eine Verklebung des Käfigs 7 mit dem zweiten Bauteil 2 vorgesehen. Hierzu sind auf der Grundplatte 10 des Käfigs 7 punktförmige Sicken 18 vorgesehen, die eine gleichmäßige Klebefilmdicke und einen definierten Abstand zwischen der Grundplatte 10 und der Unterseite des zweiten Bauteils 2 sicherstellen. In der in Fig. 8 dargestellten Ausführungsform ist der Halteclip 9 mit Rastmitteln 19 versehen, welche mit entsprechenden Aufnahmen des Käfigs 7 in Eingriff gebracht werden können. Der Halteclip 9 ist damit starr an dem Käfig 7 festlegbar, so dass die Verschiebbarkeit des Gehäuses 5 relativ zu dem Käfig 7 anders als oben beschrieben zwischen dem Halteclip 9 und dem Gehäuse 5 erfolgt.

Zur Verbindung des Käfigs 7 an dem zweiten Bauteil 2 ist es aufgrund der schwimmenden und zusätzlich verschwenkbaren Lagerung des Gehäuses hilfreich, einen Montagestift 20 zu verwenden, der statt des Verschlussbolzens 4 mit der Haltenockenschraube 6 verbindbar ist. Der Montagestift 20 besteht dabei aus einem inneren Stiftkern 21 und einer äußeren Hülse 22, welche miteinander in Gewindeeingriff stehen. Durch eine Verdrehung des Stiftkerns 21 zu der Hülse 22 lässt sich ein konischer Bereich des Stiftkerns 21 so bewegen, dass Spreitzarme 23 der Hülse 22 nach außen gestellt und auf diese Weise der Haltenocken 3 an dem Bauteil 3 fixiert wird. Hierzu sind die Spreitzarme 23 auf ihrer dem Käfig 7 zugewandten Stirnseite (in Fig. 9 unten) abgeschrägt, so dass die radiale Bewegung der Spreitzarme 23 das Gehäuse 5 und den Käfig 7 mit einer axialen Kraftkomponente gegen das Bauteil 2 presst, um die für eine Verklebung erforderliche Anpresskraft aufzubringen. Alternativ zu den Spreitzarmen 23 kann die Hülse 22 auch mit Klemmarmen 24 versehen sein, wie dies in Fig. 10 angedeutet ist. Die Klemmarme 24 stützen sich dabei nicht auf der Oberfläche des zweiten Bauteils 2 ab, sondern klemmen sich durch radiale Aufweitung in dessen Bohrung fest.

### Bezugszeichenliste

- 1: Bauteil
- 2: Bauteil
- 3: Haltenocken
- 4: Verschlussbolzen
- 5: Gehäuse
- 5a: konvexe Kalottenfläche
- 6: Haltenockenschraube
- 7: Käfig
- 8: Ausgleichsscheibe
- 8a: konkave Kalottenfläche
- 9: Halteclip
- 10: Grundplatte
- 11: erster Befestigungsvorspung
- 12: Öffnung
- 13: Lasche
- 14: Öffnung
- 15: zweiter Befestigungsvorsprung
- 16: Zunge
- 17: Befestigungshülse
- 18: Sicke
- 19: Rastelement
- 20: Montagestift
- 21: Stiftkern
- 22: Hülse
- 23: Spreitzarm
- 24: Klemmarm
- S: Schwenkpunkt

## Patentansprüche

1. Haltenocken, insbesondere für einen Schnellverschluss zum Verbinden von z.B. plattenförmigen Bauteilen (1, 2), mit einem Käfig (7), der starr mit einem der Bauteile (2) verbindbar ist und eine Grundplatte (10) aufweist, die eine in Einbaulage mit einem der Bauteile (1, 2) parallele Ebene definiert, und mit einem schwenkbar an dem Käfig (7) gelagerten Gehäuse (5), in dem eine Haltenockenschraube (6) drehfest vorgesehen ist, auf die ein mit einem anderen Bauteil (1) verbindbarer Verschlussbolzen (4) mit einem Innengewinde aufschraubbar ist, **dadurch gekennzeichnet, dass** das Gehäuse (5) relativ zu dem Käfig (7) um einen dem Käfig (7) abgewandten Schwenkpunkt (S) schwenkbar gelagert ist, und dass unabhängig von dieser Schwenkbarkeit das Gehäuse (5) relativ zu dem Käfig (7) in einer zu der Ebene der Grundplatte (10) parallelen Richtung verschiebbar ist.

2. Haltenocken nach Anspruch 1, **dadurch gekennzeichnet, dass** das Gehäuse (5) auf einer dem Käfig (7) zugewandten Seite mit einer zylindrischen Öffnung versehen ist, deren Innendurchmesser im Wesentlichen gleich dem Außendurchmesser eines Abschnitts des Verschlussbolzens (4) ist.

3. Haltenocken nach Anspruch 1 oder 2, **dadurch gekennzeichnet, dass** das Gehäuse (5) auf einer dem Käfig (7) zugewandten Stirnseite mit einer konvexen Kugelkalotte (5a) mit einer zentralen Öffnung versehen ist, wobei die konvexe Kugelkalotte (5a) zur schwenkbaren Lagerung des Gehäuses (5) mit einer Ausgleichsscheibe (8) mit einer konkaven Kalottenfläche (8a) zusammenwirkt.

4. Haltenocken nach Anspruch 3, **dadurch gekennzeichnet, dass** die Ausgleichsscheibe (8) mittels eines zwischen dem Gehäuse (5) und dem Käfig (7) angeordneten Halteclips (9), insbesondere verliersicher, an dem Gehäuse (5) befestigt ist.

5. Haltenocken nach Anspruch 4, **dadurch gekennzeichnet, dass** das Gehäuse (5) erste Befestigungsvorsprünge (11) aufweist, die zur Befestigung des Gehäuses (5) an dem Halteclip (9) in Öffnungen (12) des Halteclips (9) eingreifen.

6. Haltenocken nach einem der Ansprüche 3 bis 5, **dadurch gekennzeichnet, dass** die zylindrische Öffnung des Gehäuses (5) durch eine zylindrische Öffnung der konvexen Kugelkalotte (5a) in Richtung zu dem Käfig (7) verlängert ist.

7. Haltenocken nach einem der vorhergehenden Ansprüche, **dadurch gekennzeichnet, dass** das Gehäuse (5) zweite Befestigungsvorsprünge (15) aufweist, die zur Lagerung des Gehäuses (5) in dem Käfig (7) in Öffnungen (14) des Käfigs (7) eingreifen.

8. Haltenocken nach Anspruch 4 oder 5, **dadurch gekennzeichnet, dass** der Halteclip (9) zweite Befestigungsvorsprünge (15) aufweist, die zur Lagerung des Gehäuses (5) in dem Käfig (7) in Öffnungen (14) des Käfigs (7) eingreifen.

9. Haltenocken nach einem der vorhergehenden Ansprüche, **dadurch gekennzeichnet, dass** der Käfig (7) sich von der Grundplatte (10) weg erstreckende Abschnitte (13) aufweist, von denen wenigstens zwei jeweils eine Öffnung (14) und eine dieser zugeordnete federnde Befestigungszunge (16) aufweisen.

10. Haltenocken nach einem der Ansprüche 4 bis 9, **dadurch gekennzeichnet, dass** der Halteclip (9) relativ zu dem Käfig (7) in einer zu der Ebene der Grundplatte (10) parallelen Richtung verschiebbar ist.

11. Haltenocken nach einem der vorhergehenden Ansprüche, **dadurch gekennzeichnet, dass** auf der dem Gehäuse (5) abgewandten Seite der Grundplatte (10) des Käfigs (7) Vorsprünge, Sicken (18) und/oder Stege vorgesehen sind.

12. Haltenocken nach einem der vorhergehenden Ansprüche, **dadurch gekennzeichnet, dass** der Haltenockenschraube (6) eine Verdrehsicherung mit einem Federelement zugeordnet ist.

13. Haltenocken nach einem der vorhergehenden Ansprüche, **dadurch gekennzeichnet, dass** zusätzlich ein statt des Verschlussbolzens (4) lösbar mit der Haltenockenschraube (6) verbindbarer Montagestift (20) vorgesehen ist, der mit einem der Bauteile (2), insbesondere mittels Klemmarmen (24) und/oder Spreizarmen (23), lösbar verbindbar ist.

14. Haltenocken nach Anspruch 13, **dadurch gekennzeichnet, dass** der Montagestift (20) mit einem Innengewinde versehen ist, in welches zur Betätigung der Klemmarme (24) und/oder der Spreizarme (23) ein Stiftkern (21) einschraubbar ist.

15. Haltenocken nach Anspruch 13 oder 14, **dadurch gekennzeichnet, dass** die Klemmarme (24) und/oder die Spreizarme (23) bei Betätigung eine radiale und/oder eine axiale Haltekraft auf das Bauteil (2) ausüben.

## Claims

1. A retaining cam, particularly for a quick-release fastener for connecting, e.g., plate-shaped components (1, 2), with a cage (7) that can be rigidly connected to one of the components (2) and features a base plate (10) that in the installation position defines a parallel plane with one of the components (1, 2), and with a housing (5) that is pivotably mounted on the cage (7), wherein a retaining cam screw (6) is provided in a rotationally rigid fashion in said housing, and wherein a fastening bolt (4), which can be connected to another component (1), can be screwed on said retaining cam screw with an internal thread, **characterized in that** the housing (5) is mounted such that it can be pivoted relative to the cage (7) about a pivot point (S) that is spaced apart from the cage (7), and **in that** the housing (5) can be displaced relative to the cage (7) in a direction extending parallel to the plane of the base plate (10) independently of this pivoting capacity.

2. The retaining cam according to claim 1, **characterized in that** the housing (5) is on a side facing the cage (7) provided with a cylindrical opening, the inside diameter of which is essentially identical to the outside diameter of a section of the fastening bolt (4).

3. The retaining cam according to claim 1 or 2, **characterized in that** the housing (5) is on a front side facing the cage (7) provided with a convex spherical calotte (5a) with a central opening, wherein the convex spherical calotte (5a) cooperates with a compensating disk (8) with a concave calotte surface (8a) in order to pivotably mount the housing (5).

4. The retaining cam according to claim 3, **characterized in that** the compensating disk (8) is fastened on the housing (5), particularly in a captive fashion, by means of a retaining clip (9) arranged between the housing (5) and the cage (7).

5. The retaining cam according to claim 4, **characterized in that** the housing (5) features first fastening projections (11) that engage into openings (12) of the retaining clip (9) in order to fasten the housing (5) on the retaining clip (9).

6. The retaining cam according to one of claims 3 to 5, **characterized in that** the cylindrical opening of the housing (5) is extended toward the cage (7) by a cylindrical opening of the convex spherical calotte (5a).

7. The retaining cam according to one of the preceding claims, **characterized in that** the housing (5) features second fastening projections (15) that engage into openings (14) of the cage (7) in order to mount the housing (5) in the cage (7).

8. The retaining cam according to claim 4 or 5, **characterized in that** the retaining clip (9) features second fastening projections (15) that engage into openings (14) of the cage (7) in order to mount the housing (5) in the cage (7).

9. The retaining cam according to one of the preceding claims, **characterized in that** the cage (7) features sections (13) that extend away from the base plate (10), wherein at least two of said sections respectively feature an opening (14) and an elastic fastening tab (16) assigned thereto.

10. The retaining cam according to one of claims 4 to 9, **characterized in that** the retaining clip (9) can be displaced relative to the cage (7) in a direction extending parallel to the plane of the base plate (10).

11. The retaining cam according to one of the preceding claims, **characterized in that** projections, beads (18) and/or webs are provided on the side of the base plate (10) of the cage (7) that faces away from the housing (5).

12. The retaining cam according to one of the preceding claims, **characterized in that** an anti-twist protection with a spring element is assigned to the retaining cam screw (6).

13. The retaining cam according to one of the preceding claims, **characterized in that** an installation pin (20), which can be separably connected to the retaining cam screw (6) instead of the fastening bolt (4), is additionally provided and can be separably connected to one of the components (2), particularly by means of clamping arms (24) and/or spreading arms (23).

14. The retaining cam according to claim 13, **characterized in that** the installation pin (20) is provided with an internal thread, into which a pin core (21) can be screwed in order to actuate the clamping arms (24) and/or the spreading arms (23).

15. The retaining cam according to claim 13 or 14, **characterized in that** the clamping arms (24) and/or the spreading arms (23) exert a radial and/or an axial retaining force on the component (2) upon their actuation.

## Revendications

1. Taquet de retenue, en particulier pour une fermeture rapide pour relier des pièces de construction en forme de plaque (1, 2) par exemple, avec une cage (7) qui peut être reliée fixement à l'une des pièces (2) et présente une plaque de base (10) définissant un plan parallèle à l'une des pièces (1, 2) en position de montage, et un logement (5) disposé pivotant sur la cage (7), dans lequel une vis de taquet de retenue (6) est prévue fixe en rotation, sur laquelle peut être vissé un boulon de fermeture (4) avec un filet femelle pouvant être relié à une autre pièce (1), **caractérisé en ce que** le logement (5) est disposé en pouvant pivoter par rapport à la cage (7) sur un pivot (S) détourné de la cage (7), et qu'indépendamment de cette capacité à pivoter, le logement (5) peut être déplacé par rapport à la cage (7) dans une direction parallèle au plan de la plaque de fond (10).

2. Taquet de retenue selon la revendication 1, **caractérisé en ce que** le logement (5) est doté d'une ouverture cylindrique sur un côté tourné vers la cage (7), dont le diamètre intérieur est essentiellement égal au diamètre extérieur d'un tronçon du boulon de fermeture (4).

3. Taquet de retenue selon la revendication 1 ou 2, **caractérisé en ce que** le logement (5) est doté d'une calotte sphérique convexe (5a) avec une ouverture centrale sur une face avant tournée vers la cage (7), sachant que la calotte sphérique convexe (5a) coopère avec une rondelle de compensation (8) ayant une surface de calotte concave (8a) pour le positionnement pivotable du logement (5).

4. Taquet de retenue selon la revendication 3, **caractérisé en ce que** la rondelle de compensation (8) est fixée au logement (5) au moyen d'un clip de retenue (9), en particulier imperdable, disposé entre le logement (5) et la cage (7).

5. Taquet de retenue selon la revendication 4, **caractérisé en ce que** le logement (5) présente des premières saillies de fixation (11) qui se mettent en prise dans des ouvertures (12) du clip de retenue (9) pour fixer le logement (5) sur le clip de retenue (9).

6. Taquet de retenue selon l'une des revendications 3 à 5, **caractérisé en ce que** l'ouverture cylindrique du logement (5) est prolongée par une ouverture cylindrique de la calotte sphérique convexe (5a) en direction de la cage (7).

7. Taquet de retenue selon l'une des revendications précédentes, **caractérisé en ce que** le logement (5) présente des secondes saillies de fixation (15) qui se mettent en prise dans des ouvertures (14) de la cage (7) pour fixer le logement (5) dans la cage (7).

8. Taquet de retenue selon la revendication 4 ou 5, **caractérisé en ce que** le clip de retenue (9) présente des secondes saillies de fixation (15) qui se mettent en prise dans des ouvertures (14) de la cage (7) pour fixer le logement (5) dans la cage (7).

9. Taquet de retenue selon l'une des revendications précédentes, **caractérisé en ce que** la cage (7) présente des tronçons (13) s'éloignant de la plaque de fond (10), dont au moins deux présentent respectivement une ouverture (14) et une languette de fixation (16) élastique correspondant à celle-ci.

10. Taquet de retenue selon l'une des revendications 4 à 9, **caractérisé en ce que** le clip de retenue (9) peut être déplacé par rapport à la cage (7) dans une direction parallèle au plan de la plaque de fond (10).

11. Taquet de retenue selon l'une des revendications précédentes, **caractérisé en ce que** des saillies, des moulures (18) et/ou des traverses sont prévues sur le côté de la plaque de fond (10) de la cage (7) détourné du logement (5).

12. Taquet de retenue selon l'une des revendications précédentes, **caractérisé en ce que** la vis de taquet de retenue (6) a une sécurité anti-rotation avec un élément de ressort.

13. Taquet de retenue selon l'une des revendications précédentes, **caractérisé en ce qu'**est prévue en outre une tige de montage (20) pouvant être reliée de façon séparable à la vis de taquet de retenue (6) au lieu du boulon de fermeture (4), laquelle peut être reliée de façon séparable à l'une des pièces (2), en particulier au moyen de bras de serrage (24) et/ou de bras d'écartement (23).

14. Taquet de retenue selon la revendication 13, **caractérisé en ce que** la tige de montage (20) est dotée d'un filet femelle dans lequel un coeur de tige (21) peut être vissé pour actionner les bras de serrage (24) et/ou les bras d'écartement (23).

15. Taquet de retenue selon la revendication 13 ou 14, **caractérisé en ce que** les bras de serrage (24) et/ou les bras d'écartement (23) exercent une force de retenue radiale et/ou axiale sur la pièce (2) lorsqu'ils sont actionnés.
